# EUROPEAN PATENT APPLICATION

(11) **EP 4 564 556 A1**
(43) Date of publication of application: **04.06.2025**
(21) Application number: 22959260.5
(22) Date of filing: 23.09.2022
(51) Int. Cl.: H01M 50/242, H01M 50/249, H01M 10/613

(54) **BOX BODY, BATTERY AND VEHICLE**

(71) Applicant: CONTEMPORARY AMPEREX TECHNOLOGY (HONG KONG) LIMITED, Central (HK)
(72) Inventor: WU, Youxin, Ningde, Fujian 352100 (CN); WANG, Zengzhong, Ningde, Fujian 352100 (CN); LIU, Ruidi, Ningde, Fujian 352100 (CN); WANG, Peng, Ningde, Fujian 352100 (CN)
(74) Representative: Frick, Robert
(86) International application number: PCT/CN2022/121111
(87) International publication number: WO 2024/060258

(57) **Abstract**

The present application provides a box body, a battery and a vehicle. The box body is used for the battery. The box body includes a bearing plate and a reinforcing beam. The bearing plate is configured to fix a battery cell. The reinforcing beam is arranged on a side of the bearing plate facing away from the battery cell and is fixed to the bearing plate. **In** the present application, the reinforcing beam is arranged on a side of the bearing plate facing away from the battery cell, such that the bearing plate has improved compression resistance, and the deformation thereof is alleviated when the battery is subjected to an external impact, thereby reducing the risk that the bearing plate presses the battery cell and causes damage thereto, and improving the safety of the battery.

## Description

### TECHNICAL FIELD

The present application relates to the field of battery technology, and more particularly, to a box body, a battery and a vehicle.

### BACKGROUND

Battery cells are widely used in electronic devices such as mobile phones, laptops, battery vehicles, electric vehicles, electric planes, electric ships, electric toy cars, electric toy ships, electric toy planes, electric tools, and the like. Battery cells may include nickel-cadmium battery cells, nickel-hydrogen battery cells, lithium-ion battery cells, secondary alkaline zinc-manganese battery cells, and the like.

In the development of battery technology, it has always been a research direction in battery technology as to how to improve the safety of a battery.

### SUMMARY OF THE INVENTION

The present application provides a box body, a battery and a vehicle which can improve the safety of the battery.

In a first aspect, embodiments of the present application provide a box body for a battery. The box body includes a bearing plate and a reinforcing beam. The bearing plate is configured to fix a battery cell. The reinforcing beam is arranged on a side of the bearing plate facing away from the battery cell and is fixed to the bearing plate.

In the above technical solution, the reinforcing beam is arranged on a side of the bearing plate facing away from the battery cell, such that the bearing plate has improved compression resistance, and the deformation thereof is alleviated when the battery is subjected to an external impact, thereby reducing the risk that the bearing plate presses the battery cell and causes damage thereto, and improving the safety of the battery.

In some embodiments, there are a plurality of reinforcing beams.

In the above technical solution, when the battery is subjected to an external impact, the impact force exerted on the bearing plate can be dispersed to the plurality of reinforcing beams, thereby alleviating the deformation of the bearing plate at a plurality of positions. The positions of the plurality of reinforcing beams can be flexibly set depending on the weak points of the bearing plate. Compared with the integral reinforcing beam that covers dispersed weak points at the same time, this technical solution can reduce the volume and weight of the reinforcing beams and improve the energy density of the battery cell.

In some embodiments, the plurality of reinforcing beams include a plurality of first reinforcing beams arranged at intervals along a first direction, and each of the first reinforcing beams extends along a second direction. The thickness direction of the bearing plate, the first direction and the second direction intersect each other.

In the above technical solution, the plurality of first reinforcing beams can reinforce a rigidity of a plurality of areas of the bearing plate along the first direction, and each first reinforcing beam extending along the second direction can alleviate the deformation of the bearing plate along the second direction, such that the bearing plate has improved overall compression resistance, thereby reducing the risk that the bearing plate presses the battery cell and causes damage thereto, and improving the safety of the battery.

In some embodiments, the plurality of reinforcing beams further include a second reinforcing beam connecting adjacent first reinforcing beams.

In the above technical solution, the second reinforcing beams connect the adjacent first reinforcing beams. When the battery is subjected to an external impact, the first reinforcing beam subjected to the acting force can transfer the acting force to the adjacent first reinforcing beam through the second reinforcing beam, such that the acting force is effectively dispersed and stress concentration is reduced, thereby reducing the risk of deformation of the first reinforcing beam and the risk of deformation of the bearing plate, and improving the safety. The second reinforcing beam can also reinforce the rigidity of the portion of the bearing plate located between the two first reinforcing beams, thereby alleviating the deformation of the bearing plate.

In some embodiments, the adjacent first reinforcing beams are connected via the plurality of second reinforcing beams.

In the above technical solution, the plurality of second reinforcing beams are arranged between adjacent first reinforcing beams, such that the compression resistance of the area of the bearing plate located between the two adjacent first reinforcing beams is further enhanced, thereby reducing the risk of the deformation of the bearing plate, and improving the safety.

In some embodiments, a ratio of a dimension of the first reinforcing beam along the second direction to a dimension of the bearing plate along the second direction is K, and K satisfies 0.5 ≤ K ≤ 1.

In the above technical solution, the smaller the value of K is, the smaller the dimension of the first reinforcing beam along the second direction is, the less obvious the reinforcing effect of the first reinforcing beam on the bearing plate is, and the higher the risk of deformation of the bearing plate is. After in-depth research and a great number of experiments, the inventors found that limiting the value of K to be greater than or equal to 0.5 can reduce the risk of deformation of the bearing plate. The greater the value of K is, the greater the dimension of the first reinforcing beam along the second direction is, the more obvious the reinforcing effect of the first reinforcing beam on the bearing plate is, and the lower the risk of deformation of the bearing plate is. However, the greater the value of K is, the greater the weight and volume of the first reinforcing beam are, and the lower the energy density of the battery is. After in-depth research and a great number of experiments, the inventors found that limiting the value of K to be less than or equal to 1 can reduce the risk of deformation of the bearing plate and reduce the loss in the energy density of the battery.

In some embodiments, the plurality of reinforcing beams further include a first reinforcing beam and a second reinforcing beam, the first reinforcing beam is connected to the second reinforcing beam, the first reinforcing beam extends along the second direction, and the second reinforcing beam extends along the first direction. The thickness direction of the bearing plate, the first direction and the second direction intersect each other.

In the above technical solution, the first reinforcing beam and the second reinforcing beam are arranged to intersect each other, which can increase the area of the bearing plate that is reinforced and alleviate the deformation of the bearing plate. For example, in addition to the area of the bearing plate connected to the first reinforcing beam and the area of the bearing plate connected to the second reinforcing beam, the area of the bearing plate near the connection between the first reinforcing beam and the second reinforcing beam can also be reinforced.

In some embodiments, the first reinforcing beam and the second reinforcing beam are integrally formed.

In the above technical solution, the first reinforcing beam and the second reinforcing beam are integrated into a whole, which can improve the rigidity of the whole constituted by the first reinforcing beam and the second reinforcing beam, eliminate the process of connection of the first reinforcing beam and the second reinforcing beam, and improve the assembly efficiency of the battery.

In some embodiments, the first reinforcing beam passes through a center line of the bearing plate along the first direction.

In the above technical solution, when the bearing plate is subjected to a force, a middle area of the bearing plate is more likely to be deformed than an edge area of the bearing plate. In this technical solution, the first reinforcing beam passes through the center of the bearing plate along the first direction, so as to reinforce the strength of the middle area of the bearing plate and reduce the risk of deformation of the middle area of the bearing plate.

In some embodiments, the reinforcing beam includes a reinforcing portion and connecting portions arranged on both sides of the reinforcing portion, the connecting portions are connected to the bearing plate, and the reinforcing portion protrudes from a surface of the connecting portions facing away from the bearing plate.

In the above technical solution, the reinforcing portion protrudes from the connecting portion, which can increase the dimension of the reinforcing beam in the thickness direction of the bearing plate, so that the reinforcing beam has higher strength and rigidity, thereby effectively limiting the deformation of the bearing plate.

In some embodiments, the reinforcing beam is provided with a recess at a position corresponding to the reinforcing portion, and the recess is recessed relative to a surface of the connecting portion facing the bearing plate.

In the above technical solution, the recess corresponding to the reinforcing portion is provided on the reinforcing beam, which can reduce the weight of the reinforcing beam while ensuring that the overall strength of the reinforcing portion meets the requirements, thereby reducing the overall weight of the battery.

In some embodiments, the reinforcing beam includes a plurality of reinforcing portions arranged at intervals, and adjacent reinforcing portions are connected via a connecting portion.

In the above technical solution, by providing the plurality of reinforcing portions, the compression resistance of a single reinforcing beam can be increased, and the adjacent reinforcing portions are connected as a whole via the connecting portion, so that when only one or more reinforcing portions in the reinforcing beam are subjected to an external compression force, the compression force can be transferred to the reinforcing portions that are not subjected to the compression force through the connecting portion, and the compression force is dispersed to each reinforcing portion of the reinforcing beam, thereby reducing the influence of the compression force on the reinforcing beam, further improving the compression resistance of the reinforcing beam, consequently improving the overall strength of the box body, and thus improving the strength of the battery using the box body.

In some embodiments, a first frame body is further included. The first frame body is connected to the bearing plate and is enclosed with the bearing plate to form a first cavity. The battery cell is accommodated in the first cavity. The reinforcing beam is connected to the first frame body via a fastener.

In the above technical solution, a part of the reinforcing beam is connected to the first frame body via a fastener, so that the reinforcing beam is not only fixedly connected to the bearing plate, but also fixedly connected to the first frame body, thereby improving the stability of the reinforcing beam. When the bearing plate is compressed or collided, part of the compression force or collision force can be transferred to the reinforcing beam and the first frame body through the bearing plate, thereby dispersing the impression force or collision force exerted on the bearing plate and further improving the overall strength of the box body.

In some embodiments, a second frame body is further included, and the second frame body is arranged on a side of the bearing plate facing away from the battery cell and is connected to the bearing plate. The bearing plate and the second frame body are enclosed to form a second cavity. The battery includes a control unit accommodated in the second cavity, and the control unit is electrically connected to the battery cell.

In the above technical solution, a second frame body capable of storing the control unit is provided on the bearing plate, so as to improve the integration degree of the box body and reduce the space occupied by the box body in the whole vehicle. When the battery is subjected to an external impact, the second frame body can also disperse the impact force exerted on the bearing plate and alleviate the deformation of the bearing plate.

In some embodiments, in the thickness direction of the bearing plate, an end of the reinforcing beam facing away from the bearing plate does not extend beyond an end of the second frame body facing away from the bearing plate.

In the above technical solution, the reinforcing beam and the second frame body can share part of the space in the thickness direction, and the reinforcing beam will not additionally increase the maximum dimension of the battery in the thickness direction, thereby improving the space utilization and the energy density of the battery.

In some embodiments, the reinforcing beam is spaced apart from the second frame body.

In the above technical solution, the reinforcing beam is spaced apart from the second frame body to reduce the risk of interference between the reinforcing beam and the second frame body during battery assembly. The second frame body is configured to protect the control unit. The reinforcing beam is spaced apart from the second frame body, which can reduce the acting force transferred to the second frame body and alleviate the risk that the second frame body deforms and compresses the control unit.

In a second aspect, embodiments of the present application provide a battery including a battery cell; and a box body according to any one of the embodiments in the first aspect and configured to accommodate the battery cell.

In a third aspect, embodiments of the present application provide a vehicle, including a battery according to the embodiment in the second aspect and configured to provide electric energy.

In some embodiments, the reinforcing beam is a horizontal beam or a longitudinal beam of the vehicle.

In the above technical solution, the reinforcing beam integrated on the battery can not only improve the overall rigidity of the battery, but also save the use of beams in the vehicle, reduce the redundancy in the strength design of the vehicle, reduce the weight of the vehicle, and improve the integration degree of the vehicle.

In some embodiments, the battery cell is located at a lower side of the bearing plate; and a pressure relief mechanism is provided at an end of the battery cell facing away from the bearing plate.

In the above technical solution, when the battery cell experiences thermal runaway, the battery cell can have the high-temperature and high-pressure substances in the battery cell released to the side away from the vehicle through the pressure relief mechanism, thereby reducing the risk of high-temperature and high-temperature substances endangering the vehicle and the passenger and improving the safety.

### BRIEF DESCRIPTION OF DRAWINGS

In order to illustrate the technical solutions of the embodiments of the present application more clearly, the drawings required in the embodiments of the present application are briefly introduced below. Obviously, the drawings described below are only some embodiments of the present application. For those of ordinary skill in the art, other drawings can also be obtained according to the drawings without any creative efforts.
Fig. 1 is a schematic structural view of a vehicle provided in some embodiments of the present application;
Fig. 2 is a schematic exploded view of a battery provided in some embodiments of the present application;
Fig. 3 is a schematic structural view of a box body provided in some embodiments of the present application;
Fig. 4 is a schematic structural top view of a box body provided in some embodiments of the present application;
Fig. 5 is a schematic structural top view of a box body provided in some other embodiments of the present application;
Fig. 6 is a schematic enlarged view of the box body shown in Fig. 4 at a circular frame Q; and
Fig. 7 is a schematic structural side view of a box body provided in some embodiments of the present application.

In the drawings, the figures are not drawn to the actual scale.

Description of reference numerals:
1000. Vehicle; 2000. Battery; 2010. Box body; 2020. Battery cell; 2030. Pressure relief mechanism; 3000. Controller; 4000. Motor;
1. Bearing plate;
2. Reinforcing beam; 21. First reinforcing beam; 22. Second reinforcing beam; E1. Center line; 23. Reinforcing portion; 24. Connecting portion; 25. Recess; 26. First frame body; 27. Second frame body;
X. First direction; Y. Second direction; Z. Thickness direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "plurality of" refers to more than two (including two).

In the present application, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in embodiments of the present application. The battery cell may be in a cylindrical shape, a flat shape, a cuboid shape or another shape, which is not limited in the embodiments of the present application either. The battery cells are generally classified into three types depending on the way of package: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. The battery generally includes a box body for encapsulating one or a plurality of battery cells. The box body can prevent liquid or other foreign matters from affecting charging or discharging of the battery cells.

In the related art, the battery cells of a battery are usually fixed to a bearing plate of a box body. The inventors noticed that the bearing plate needs to bear the weight of the battery cells. When the battery is subjected to an external impact, the bearing plate will be subjected to a large acting force. The bearing plate may be deformed due to insufficient rigidity, causing the risk that the bearing plate presses the battery cells and causes damages thereto, thereby causing the risk of thermal runaway of the battery.

In view of this, embodiments of the present application provide a technical solution, in which the box body of the battery includes a bearing plate and a reinforcing beam. The bearing plate is configured to fix a battery cell. The reinforcing beam is arranged on a side of the bearing plate facing away from the battery cell and is fixed to the bearing plate.

In the above technical solution, the reinforcing beam is arranged on a side of the bearing plate facing away from the battery cell, such that the bearing plate has improved compression resistance, and the deformation thereof is alleviated when the battery is subjected to an external impact, thereby reducing the risk that the bearing plate presses the battery cell and causes damage thereto, and improving the safety of the battery.

The technical solutions described in the embodiments of the present application are applicable to a battery and an electrical apparatus using the battery.

The electrical apparatus may be a vehicle, a mobile phone, a portable device, a laptop computer, a ship, a spacecraft, an electric toy, an electric tool, and the like. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric a screwdriver, an electric hammer, an impact drill, a concrete vibrator, and an electric planer. The electrical apparatus is not specially limited in the embodiments of the present application.

In the following embodiments, for the convenience of description, the electrical apparatus being a vehicle is taken as an example for illustration.

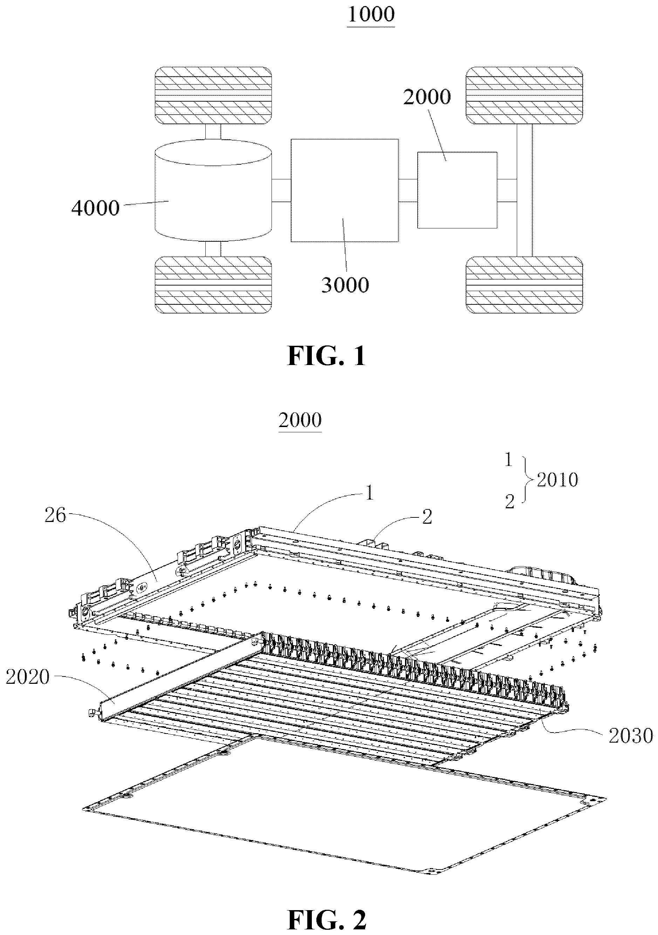

Fig. 1 is a schematic structural view of a vehicle provided in some embodiments of the present application.

As shown in Fig. 1, the vehicle 1000 is provided with a battery 2000 inside. The battery 2000 may be provided at the bottom or head or tail of the vehicle 1000. The battery 2000 may be configured to supply power to the vehicle 1000. For example, the battery 2000 may be used as an operating power source for the vehicle 1000.

The vehicle 1000 may further include a controller 3000 and a motor 4000. The controller 3000 is configured to control the battery 2000 to supply power to the motor 4000, for example, to supply power for starting, navigation and driving of the vehicle 1000.

In some embodiments of the present application, the battery 2000 can not only be used as the operating power source for the vehicle 1000, but also be used as a driving power source for the vehicle 1000 to replace or partially replace fuel or natural gas to provide driving power for the vehicle 1000.

Fig. 2 is a schematic exploded view of a battery provided in some embodiments of the present application.

As shown in Fig. 2, the battery 2000 includes a box body 2010 and a battery cell 2020, and the battery cell 2020 is accommodated within the box body 2010.

There may be one or more battery cells 2020 in the battery 2000. If there are a plurality of battery cells 2020, the plurality of battery cells 2020 may be connected in series or parallel or in hybrid connection, where the hybrid connection means that some of the plurality of battery cells 2020 are connected in series and some are connected in parallel. The plurality of battery cells 2020 may be directly connected together in series or in parallel or in hybrid connection, and then the whole composed of the plurality of battery cells 2020 may be accommodated in the box body 2010; and of course, the plurality of battery cells 2020 may be connected in series or in parallel or in hybrid connection to form a battery module first, and then a plurality of battery modules may be connected in series or in parallel or in hybrid connection to form a whole which is accommodated in the box body 2010.

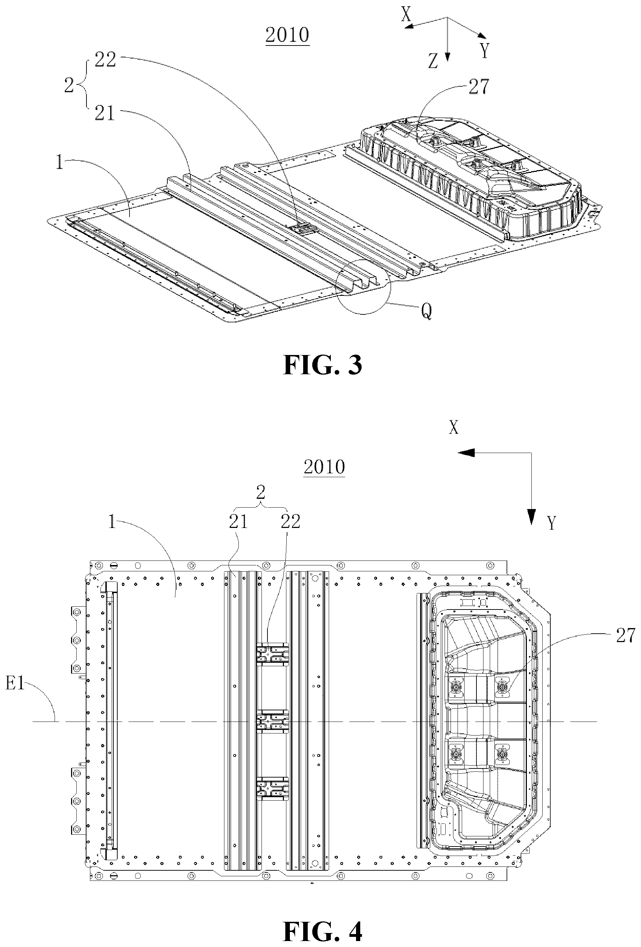

Fig. 3 is a structural schematic view of a box body provided in some embodiments of the present application.

As shown in Fig. 3, the box body 2010 of the embodiments of the present application is used for a battery. The box body 2010 includes a bearing plate 1 and a reinforcing beam 2. The bearing plate 1 is configured to fix the battery cell 2020. The reinforcing beam 2 is arranged on a side of the bearing plate 1 facing away from the battery cell 2020 and is fixed to the bearing plate 1.

The means by which the battery cell 2020 is fixed to the bearing plate 1 is not limited in the embodiments of the present application. By way of example, the battery cell 2020 may be fixed to the bearing plate 1 by bonding, clamping or other means.

The material of the bearing plate 1 includes steel, aluminum, composite material or other materials.

The number, position and shape of the reinforcing beams 2 are not limited in the embodiments of the present application. By way of example, there may be one or more reinforcing beams 2. By way of example, the reinforcing beam may be in a straight line, a curved line or other shapes.

By way of example, the reinforcing beam 2 may be arranged in the middle region of the bearing plate 1, or in the edge region of the bearing plate 1, or may in both the middle region and the edge region of the bearing plate 1.

The extended dimension of the reinforcing beam 2 is not limited in the embodiments of the present application. For example, in the extension direction of the reinforcing beam 2, the dimension of the reinforcing beam 2 may be greater than, less than or equal to the dimension of the bearing plate 1.

In some examples, the reinforcing beam 2 and the bearing plate 1 may be two components provided separately, and the two components may be connected by welding, threading, clamping, bonding or other means. In some other examples, the reinforcing beam 2 and the bearing plate 1 may also be of an integrally formed structure.

The reinforcing beam 2 may be a solid structure or a hollow structure.

The reinforcing beam 2 and the bearing plate 1 may be made of the same material or different materials. By way of example, the compression resistance of the material of the reinforcing beam 2 is greater than that of the material of the bearing plate 1.

In the embodiments of the present application, when the battery cell is subjected to an external impact, the reinforcing beam 2 fixed to the bearing plate 1 can limit the deformation of the bearing plate 1, improve the compression resistance of the bearing plate 1, reduce the risk of that the bearing plate 1 presses the battery cell and causes damages thereto, and improve the safety of the battery.

In some embodiments, as shown in Fig. 3, there are a plurality of reinforcing beams 2.

The shapes and dimensions of different reinforcing beams 2 may be the same or different. By way of example, for any two reinforcing beams 2, the extension directions of the two reinforcing beams 2 may be the same or different, the two reinforcing beams 2 may be connected or arranged at an interval, and the shapes of the two reinforcing beams 2 may be the same or different.

In this embodiment, when the battery is subjected to an external impact, the impact force exerted on the bearing plate 1 can be dispersed to the plurality of reinforcing beams 2, thereby alleviating the deformation of the bearing plate 1 at a plurality of positions. The positions of the plurality of reinforcing beams 2 can be flexibly set depending on the weak points of the bearing plate 1. Compared with the integral reinforcing beam that covers scattered weak points at the same time, the embodiments of the present application can reduce the volume and weight of the reinforcing beams 2 and improve the energy density of the battery cell.

In some embodiments, as shown in Fig. 3, the plurality of reinforcing beams 2 include a plurality of first reinforcing beams 21 spaced at intervals along a first direction X, and each of the first reinforcing beams 21 extends along a second direction Y. The thickness direction of the bearing plate 1, the first direction X and the second direction Y intersect each other.

In the first direction X, the plurality of first reinforcing beams 21 may be arranged at equal intervals or at unequal intervals. For two adjacent first reinforcing beams 21, the dimensions of the two first reinforcing beams 21 along the second direction Y may be the same or different.

The extension dimension of the reinforcing beams 21 along the second direction Y is not limited in the embodiments of the present application. In some examples of this embodiment, the first reinforcing beam 21 may extend along the second direction Y to one edge or both edges of the two edges at opposite sides of the bearing plate 1 along the second direction Y. The first reinforcing beam 21 may extend along the second direction Y from the edge of the bearing plate 1 to the center of the bearing plate 1.

In some other examples of this embodiment, a plurality of first reinforcing beams 21 may be arranged side by side along the second direction Y on the bearing plate 1. It should be noted that neither the length of the first reinforcing beam 21 extending along the second direction Y nor the sum of the lengths of a plurality of first reinforcing beams 21 extending along the second direction Y after being arranged side by side along the second direction Y can exceed the length of the bearing plate 1 along the second direction Y.

In an embodiment of the present application, the plurality of first reinforcing beams 21 can reinforce a rigidity of a plurality of areas of the bearing plate 1 along the first direction X, and each first reinforcing beam 21 extending along the second direction Y can alleviate the deformation of the bearing plate 1 along the second direction Y, such that the bearing plate has improved overall compression resistance, thereby reducing the risk that the bearing plate presses the battery cell and causes damage thereto, and improving the safety of the battery.

In some embodiments, the thickness direction of the bearing plate 1, the first direction X and the second direction Y are perpendicular to each other.

Fig. 4 is a schematic structural top view of a box body provided in some embodiments of the present application.

In some embodiments, as shown in Fig. 4, the plurality of reinforcing beams 2 further include a second reinforcing beam 22 that connects the adjacent first reinforcing beams 21.

In some examples of this embodiment, the second reinforcing beam 22 may extend along the first direction X, thereby connecting two adjacent first reinforcing beams 21. In some other examples of this embodiment, the second reinforcing beam 22 may extend along a direction at a predefined angle with respect to the first direction X, thereby connecting two believe first reinforcing beams 21.

In some examples, the material of the first reinforcing beam 21 and the material of the second reinforcing beam 22 may be the same. In some other examples, the material of the first reinforcing beam 21 and the material of the second reinforcing beam 22 may be different.

In some examples, the shape of the first reinforcing beam 21 and the shape of the second reinforcing beam 22 may be the same. In some other examples, the dimension of the first reinforcing beam 21 and the dimension of the second reinforcing beam 22 may be the same. In yet some other examples, the second reinforcing beam 22 may be provided with a clasping portion having a different shape from that of the first reinforcing beam 21, so that the first reinforcing beam 21 and the second reinforcing beam 22 can clasp different components of the whole vehicle respectively.

It should be noted that, when there are a plurality of second reinforcing beams 22, the dimensions of the plurality of reinforcing beams 2 may be different; and the shapes of the plurality of reinforcing beams 2 may be different.

In some examples, the second reinforcing beam 22 may be fixedly connected to the bearing plate 1 by means of bolts, welding, bonding, or the like.

In this embodiment, the second reinforcing beam 22 connects the adjacent first reinforcing beams 21. When the battery is subjected to an external impact, the first reinforcing beam 21 subjected to the acting force can transfer the acting force to the adjacent first reinforcing beam 21 through the second reinforcing beam 22, such that the acting force is effectively dispersed and stress concentration is reduced, thereby reducing the risk of deformation of the first reinforcing beam 21 and the risk of deformation of the bearing plate, and improving the safety. The second reinforcing beam 22 can also reinforce the rigidity of the portion of the bearing plate 1 located between the two first reinforcing beams 21, thereby alleviating the deformation of the bearing plate 1.

In some embodiments, any two adjacent first reinforcing beams 21 are connected by the second reinforcing beam 22.

In some embodiments, as shown in Fig. 4, the adjacent first reinforcing beams 21 are connected by a plurality of second reinforcing beams 22.

In this embodiment, the plurality of second reinforcing beams 22 are arranged between the adjacent first reinforcing beams 21, such that the compression resistance of the area of the bearing plate 1 located between the two adjacent first reinforcing beams 21 is further enhanced, thereby reducing the risk of the deformation of the bearing plate 1, and improving the safety.

In some embodiments, a ratio of a dimension of the first reinforcing beam 21 along the second direction Y to a dimension of the bearing plate 1 along the second direction Y is K, and K satisfies 0.5 ≤ K ≤ 1. By way of example, the value of K may be 0.5, 0.6, 0.7, 0.8, 0.9 or 1.

The smaller the value of K is, the smaller the dimension of the first reinforcing beam 21 along the second direction Y is, the less obvious the reinforcing effect of the first reinforcing beam 21 on the bearing plate 1 is, and the higher the risk of deformation of the bearing plate 1 is. After in-depth research and a great number of experiments, the inventors found that limiting the value of K to be greater than or equal to 0.5 can reduce the risk of deformation of the bearing plate 1.

The greater the value of K is, the greater the dimension of the first reinforcing beam 21 along the second direction Y is, the more obvious the reinforcing effect of the first reinforcing beam 21 on the bearing plate 1 is, and the lower the risk of deformation of the bearing plate 1 is. However, the greater the value of K is, the greater the weight and volume of the first reinforcing beam 21 are, and the lower the energy density of the battery is. After in-depth research and a great number of experiments, the inventors found that limiting the value of K to be less than or equal to 1 can reduce the risk of deformation of the bearing plate 1 and reduce the loss in the energy density of the battery.

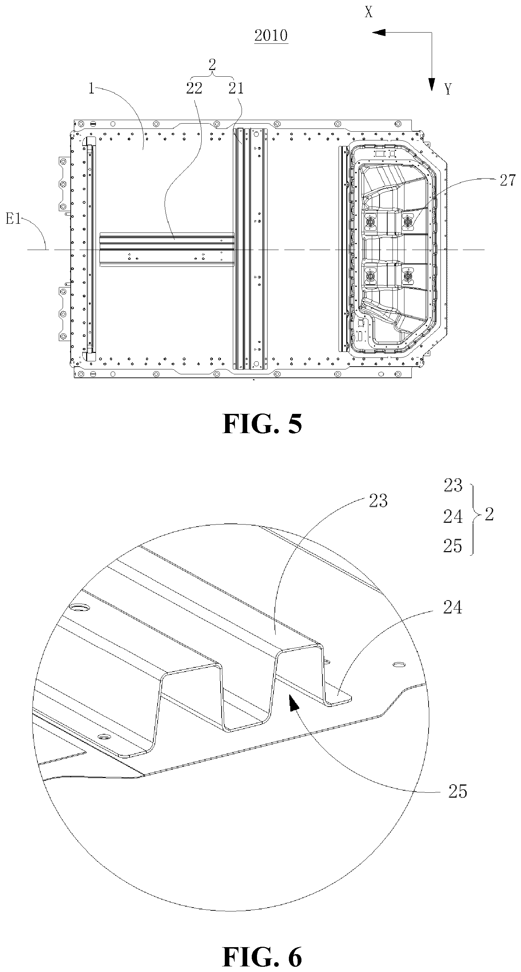

Fig. 5 is a schematic structural top view of a box body provided in yet some other embodiments of the present application.

In some embodiments, as shown in Fig. 5, the plurality of reinforcing beams 2 further include a first reinforcing beam 21 and a second reinforcing beam 22, the first reinforcing beam 21 is connected to the second reinforcing beam 22, the first reinforcing beam 21 extends along the second direction Y, and the second reinforcing beam 22 extends along the first direction X. The thickness direction of the bearing plate 1, the first direction X and the second direction Y intersect each other.

In some examples of this embodiment, there is one first reinforcing beam 21, there is one second reinforcing beam 22, the first reinforcing beam 21 is located on the bearing plate 1 and extends along the second direction Y, one end of the second reinforcing beam 22 is connected to the first reinforcing beam 21, and the other end of the second reinforcing beam 22 can extend to the edge of the bearing plate 1, or extend to a predefined area of the bearing plate 1.

In this embodiment, the first reinforcing beam 21 and the second reinforcing beam 22 are arranged to intersect each other, which can increase the area of the bearing plate 1 that is reinforced and alleviate the deformation of the bearing plate 1. For example, in addition to the area of the bearing plate 1 connected to the first reinforcing beam 21 and the area of the bearing plate 1 connected to the second reinforcing beam 22, the area of the bearing plate 1 near the connection between the first reinforcing beam 21 and the second reinforcing beam 22 may also be reinforced.

In some embodiments, the first reinforcing beam 21 and the second reinforcing beam 22 are integrally formed.

In this embodiment, the first reinforcing beam 21 and the second reinforcing beam 22 are integrated into a whole, which can improve the rigidity of the whole constituted by the first reinforcing beam 21 and the second reinforcing beam 22, eliminate the process of connection of the first reinforcing beam 21 and the second reinforcing beam 22, and improve the assembly efficiency of the battery 2000.

In some embodiments, as shown in Fig. 5, the first reinforcing beam 21 passes through a center line E1 of the bearing plate 1 along the first direction X.

In some examples, the first reinforcing beam 21 is symmetrically arranged about the center line E1 along the first direction X. In some other examples, the dimension of the portion of the first reinforcing beam 21 located on one side of the center line E1 along the first direction X may be greater than that of the portion of the first reinforcing beam 21 located on the other side of the center line E1 along the first direction X.

When the bearing plate 1 is subjected to a force, the middle area of the bearing plate 1 is more likely to be deformed than the edge area of the bearing plate 1. In the embodiments of the present application, the first reinforcing beam 21 passes through the center of the bearing plate 1 along the first direction X, so as to reinforce the strength of the middle area of the bearing plate 1 and reduce the risk of deformation of the middle area of the bearing plate 1.

Fig. 6 is a schematic enlarged view of the box body shown in Fig. 4 at a circular frame Q.

In some embodiments, as shown in Fig. 6, the reinforcing beam 2 includes a reinforcing portion 23 and connecting portions 24 arranged on both sides of the reinforcing portion 23, the connecting portions 24 are connected to the bearing plate 1, and the reinforcing portion 23 protrudes from a surface of the connecting portions 24 facing away from the bearing plate 1.

The connecting portions 24 are fixed to the bearing plate 1 by means of bolts, welding, bonding, clamping or the like.

The connecting portions 24 and the reinforcing portion 23 may be of an integrally formed structure, or may be connected by means of bolts, welding, bonding, clamping or the like.

There may be one or more reinforcing portions 23.

In this embodiment, the reinforcing portion 23 protrudes from the connecting portions 24, which can increase the dimension of the reinforcing beam 2 in the thickness direction of the bearing plate 1, so that the reinforcing beam 2 has higher strength and rigidity, thereby effectively limiting the deformation of the bearing plate.

In some embodiments, with continued reference to Fig. 6, the reinforcing beam 2 is provided with a recess 25 at a position corresponding to the reinforcing portion 23, and the recess 25 is recessed relative to a surface of the connecting portion 24 facing the bearing plate 1.

In some examples, the reinforcing portion 23 is a portion protruding from the connecting portion 24, and the recess 25 is located on a side of the reinforcing portion 23 facing the bearing plate 1, and is formed by recessing of a surface of the connecting portion 24 facing the bearing plate 1. It can be understood that the recess 25 reduces the thickness of the reinforcing portion 23. In some examples of this embodiment, the concave shape of the recess 25 matches the convex shape of the reinforcing portion 23, so that the reinforcing portion 23 is a thin-walled structure. The weight of the reinforcing beam 2 can be reduced as much as possible while the overall strength of the reinforcing portion 23 is ensured.

In some examples of this embodiment, the recess 25 on the reinforcing beam 2 penetrates the reinforcing beam 2 along the extension direction of the reinforcing beam 2. In some other examples of this embodiment, the recess 25 on the reinforcing beam 2 extends along the extension direction of the reinforcing beam 2 to a predefined position of the reinforcing beam 2. In some other examples of this embodiment, a plurality of recesses 25 may be provided on the reinforcing beam 2 along the extension direction.

In this embodiment, the recess 25 corresponding to the reinforcing portion 23 is provided on the reinforcing beam 2, which can reduce the weight of the reinforcing beam 2 while ensuring that the overall strength of the reinforcing portion 23 meets the requirements, thereby reducing the overall weight of the battery.

In some embodiments, with continued reference to Figs. 5 and 6, the reinforcing beam 2 includes a plurality of reinforcing portions 23 arranged at intervals, and adjacent reinforcing portions 23 are connected by a connecting portion 24.

In some examples of this embodiment, one reinforcing beam 2 may include a plurality of reinforcing portions 23 arranged at intervals. By way of example, one first reinforcing beam 21 includes a plurality of reinforcing portions 23 that are arranged at intervals along the first direction X, and adjacent reinforcing portions 23 are connected by a connecting portion 24, so that the plurality of reinforcing portions 23 constitute a first reinforcing beam 21. It can be understood that the connecting portion 24 between two adjacent reinforcing portions 23 can be shared, that is, a connecting portion 24 is provided between two adjacent reinforcing portions 23, and this connecting portion 24 can not only connect the two adjacent reinforcing portions 23 into a whole, but also fix the two reinforcing portions 23 to the bearing plate 1.

In some examples, the plurality of reinforcing portions 23 on one reinforcing beam 2 may have different dimensions and shapes. The minimum distances between the plurality of reinforcing portions 23 may also be different.

In this embodiment, by providing the plurality of reinforcing portions 23, the compression resistance of a single reinforcing beam 2 can be increased, and the adjacent reinforcing portions 24 are connected as a whole through the connecting portions 23, so that when only one or more reinforcing portions 23 in the reinforcing beam 2 are subjected to an external compression force, the compression force can be transferred to the reinforcing portions 23 that are not subjected to the compression force through the connecting portions 24, and the compression force is dispersed to each reinforcing portion 23 of the reinforcing beam 2, thereby reducing the influence of the compression force on the reinforcing beam 2, further improving the compression resistance of the reinforcing beam 2, thereby improving the overall strength of the box body 2010, and consequently improving the strength of the battery using the box body 2010.

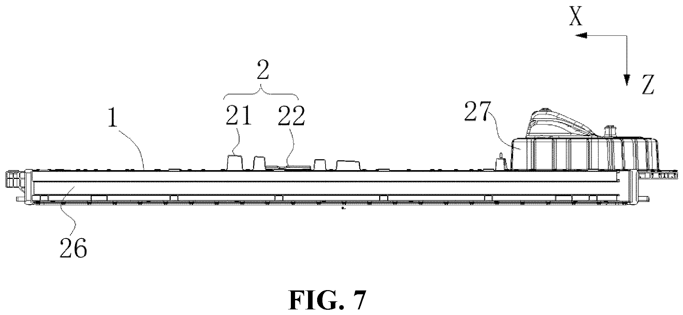

Fig. 7 is a schematic structural side view of a box body provided in some embodiments of the present application.

In some embodiments, as shown in Fig. 7, the box body 2010 further includes a first frame body 26. The first frame body 26 is connected to the bearing plate 1 and is enclosed with the bearing plate 1 to form a first cavity. The battery cell 2020 is accommodated in the first cavity. The reinforcing beam 2 is connected to the first frame body 26 via a fastener.

In some examples, the first frame body 26 may be formed by enclosing a plurality of side beams, and the plurality of side beams are fixed to each other to ensure the connection strength of the first frame body 26.

In some examples, the shape enclosed by the first frame body 26 includes a square, a rectangle, a circle, or other shapes.

In this embodiment, a part of the reinforcing beam 2 is connected to the first frame body 26 via a fastener, so that the reinforcing beam 2 is not only fixedly connected to the bearing plate 1, but also fixedly connected to the first frame body 26, thereby improving the stability of the reinforcing beam 2. When the bearing plate 1 is compressed or collided, part of the compression force or collision force can be transferred to the reinforcing beam 2 and the first frame body 26 through the bearing plate 1, thereby dispersing the impression force or collision force exerted on the bearing plate 1 and further improving the overall strength of the box body 2010. In some embodiments, with continued reference to Fig. 7, the box body 2010 further includes a second frame body 27, and the second frame body 27 is arranged on a side of the bearing plate 1 facing away from the battery cell 2020 and is connected to the bearing plate 1. The bearing plate 1 and the second frame body 27 are enclosed to form a second cavity. The battery 2000 includes a control unit accommodated in the second cavity, and the control unit is electrically connected to the battery cell 2020.

In some examples, the second frame body 27 is located on a side of the bearing plate 1 facing away from the battery cell 2020, and the second frame body 27 is formed by enclosing a plurality of side walls. The material of the side wall may be the same as that of the bearing plate 1. A plurality of control units may be placed in the second frame body 27, and the control units control the battery cell 2020 on the other side of the bearing plate 1. It can be understood that the second frame body 27 may be fixed to the bearing plate 1, or may be integrally formed with the bearing plate 1. Furthermore, a part of the side wall of the second frame body 27 may be fixedly connected to a part of the structure of the first frame body 26 via a fastener.

In this embodiment, a second frame body 27 capable of storing the control unit is provided on the bearing plate 1, so as to improve the integration degree of the box body 2010 and reduce the space occupied by the box body 2010 in the whole vehicle. When the battery is subjected to an external impact, the second frame body 27 can also disperse the impact force exerted on the bearing plate 1 and alleviate the deformation of the bearing plate.

In some embodiments, the control unit includes a power distribution unit.

In some embodiments, with continued reference to Fig. 7, in the thickness direction Z of the bearing plate 1, an end of the reinforcing beam 2 facing away from the bearing plate 1 does not extend beyond an end of the second frame body 27 facing away from the bearing plate 1.

In the thickness direction Z of the bearing plate 1, the maximum dimension of the reinforcing beam 2 is smaller than that of the second frame body 27.

In an embodiment of the present application, the reinforcing beam 2 and the second frame body 27 can share part of the space in the thickness direction Z, and the reinforcing beam 2 will not additionally increase the maximum dimension of the battery in the thickness direction Z, thereby improving the space utilization and the energy density of the battery.

In some embodiments, as shown in Fig. 7, the reinforcing beam 2 is spaced apart from the second frame body 27.

In this embodiment, the reinforcing beam 2 is spaced apart from the second frame body 27 to reduce the risk of interference between the reinforcing beam 2 and the second frame body 27 during battery assembly. The second frame body 27 is configured to protect the control unit. The reinforcing beam 2 is spaced apart from the second frame body 27, which can reduce the acting force transferred to the second frame body 27 and alleviate the risk that the second frame body 27 deforms and compresses the control unit.

In some embodiments, the present application further provides a battery 2000 including a battery cell 2020 and a box body 2010 for a battery 2000 in any one of the above embodiments. The box body 2010 is configured to accommodate the battery cell 2020.

In some embodiments, the present application further provides a vehicle 1000 including a battery 2000 in the above embodiment. The battery 2000 is configured to supply electric energy.

In some embodiments, the reinforcing beam 2 is a horizontal beam or a longitudinal beam of the vehicle 1000.

In this embodiment, the reinforcing beam 2 integrated on the battery can not only improve the overall rigidity of the battery, but also save the use of beams in the vehicle 1000, reduce the redundancy in the strength design of the vehicle, reduce the weight of the vehicle, and improve the integration degree of the vehicle.

In some embodiments, as shown in Fig. 2, the battery cell 2020 is located on a lower side of the bearing plate 1. A pressure relief mechanism 2030 is provided at an end of the battery cell 2020 facing away from the bearing plate 1.

In this embodiment, the battery 2000 is installed on the vehicle 1000, and the battery cell 2020 is located on the lower side of the bearing plate 1. In other words, the bearing plate 1 is located on a side close to the vehicle 1000, and the battery cell 2020 is fixed to the bearing plate 1. The pressure relief mechanism 2030 is provided at an end of the battery cell 2020 facing away from the bearing plate 1. When the battery cell 2020 experiences thermal runaway, the battery cell 2020 can have the high-temperature and high-pressure substances in the battery cell 2020 released to a side facing away from the vehicle 1000 through the pressure relief mechanism 2030, thereby reducing the risk of high-temperature and high-temperature substances endangering the vehicle and the passenger and improving the safety.

In some embodiments, the bearing plate 1 is fixed to the chassis of the vehicle. By way of example, the bearing plate 1 is fixed to the chassis of the vehicle via a fastener.

In some embodiments, the terminal posts of the battery cell and the pressure relief mechanism 2030 are orientated downwards and can share the bottom ball striking space at the bottom of the box body, thereby improving the volume utilization of the battery.

In some embodiments, referring to Figs. 2 and 3, the present application provides a box body 2010. The box body 2010 is used for a battery. The box body 2010 includes a bearing plate 1 and a reinforcing beam 2, and the bearing plate 1 is configured to fix a battery cell 2020. The reinforcing beam 2 is arranged on a side of the bearing plate 1 facing away from the battery cell 2020 and is fixed to the bearing plate 1. There are a plurality of reinforcing beams 2, and at least some of the reinforcing beams 2 are arranged on the bearing plate 1 and extend along a predefined direction. The present application further provides a vehicle 1000. The vehicle 1000 includes a battery 2000, and the battery 2000 includes a box body 2010 for accommodating a battery cell 2020. The reinforcing beam 2 on the box body 2010 may be replaced by a horizontal beam or a longitudinal beam on the vehicle 1000.

It should be noted that the embodiments in the present application and the features in the embodiments may be combined with each other provided that there is no conflict.

Finally, it should be noted that the above embodiments are merely used for illustrating rather than limiting the technical solutions of the present application. Although the present application is described in detail with reference to the above embodiments, those of ordinary skill in the art should understand that the technical solutions recited in the above embodiments can still be modified, or some of the technical features therein can be equivalently substituted. However, such modifications or substitutions do not cause the essence of the corresponding technical solutions to depart from the spirit and scope of the technical solutions of the embodiments of the present application.

## Claims

1. A box body (2010) for a battery, comprising:
a bearing plate (1) configured to fix a battery cell (2020); and
a reinforcing beam (2) arranged on a side of the bearing plate (1) facing away from the battery cell (2020) and fixed to the bearing plate (1).

2. The box body (2010) according to claim 1, wherein there are a plurality of the reinforcing beams (2).

3. The box body (2010) according to claim 2, wherein the plurality of reinforcing beams (2) comprise a plurality of first reinforcing beams (21) arranged at intervals along a first direction (X), and each of the first reinforcing beams (21) extends along a second direction (Y); and
a thickness direction (Z) of the bearing plate (1), the first direction (X) and the second direction (Y) intersect each other.

4. The box body (2010) according to claim 3, wherein the plurality of reinforcing beams (2) further comprise a second reinforcing beam (22), and the second reinforcing beam (22) connects the adjacent first reinforcing beams (21).

5. The box body (2010) according to claim 4, wherein the adjacent first reinforcing beams (21) are connected by the plurality of second reinforcing beams (22).

6. The box body (2010) according to any one of claims 3 to 5, wherein a ratio of a dimension of the first reinforcing beam (21) along the second direction (Y) to a dimension of the bearing plate (1) along the second direction (Y) is K, and K satisfies 0.5 ≤ K ≤ 1.

7. The box body (2010) according to claim 2, wherein the plurality of reinforcing beams (2) comprise the first reinforcing beam (21) and the second reinforcing beam (22), the first reinforcing beam (21) and the second reinforcing beam (22) are connected to each other, the first reinforcing beam (21) extends along the second direction (Y), and the second reinforcing beam (22) extends along the first direction (X); and
the thickness direction (Z) of the bearing plate (1), the first direction (X) and the second direction (Y) intersect each other.

8. The box body (2010) according to any one of claims 4 to 7, wherein the first reinforcing beam (21) and the second reinforcing beam (22) are integrally formed.

9. The box body (2010) according to any one of claims 3 to 8, wherein the first reinforcing beam (21) passes through a center line (E1) of the bearing plate (1) along the first direction (X).

10. The box body (2010) according to any one of claims 1 to 9, wherein the reinforcing beam (2) comprises a reinforcing portion (23) and connecting portions (24) arranged on both sides of the reinforcing portion (23), the connecting portions (24) are connected to the bearing plate (1), and the reinforcing portion (23) protrudes from a surface of the connecting portion (24) facing away from the bearing plate (1).

11. The box body (2010) according to claim 10, wherein the reinforcing beam (2) is provided with a recess (25) at a position corresponding to the reinforcing portion (23), and the recess (25) is recessed relative to a surface of the connecting portion (24) facing the bearing plate (1).

12. The box body (2010) according to claim 10 or 11, wherein the reinforcing beam (2) comprises a plurality of reinforcing portions (23) arranged at intervals, and the adjacent reinforcing portions (23) are connected by the connecting portion (24).

13. The box body (2010) according to any one of claims 1 to 12, further comprising a first frame body (26), the first frame body (26) connected to the bearing plate (1) and enclosed with the bearing plate (1) to form a first cavity, and the battery cell (2020) accommodated in the first cavity; and
the reinforcing beam (2) connected to the first frame body (26) via a fastener.

14. The box body (2010) according to any one of claims 1 to 13, further comprising a second frame body (27), the second frame body (27) arranged on a side of the bearing plate (1) facing away from the battery cell (2020) and connected to the bearing plate (1);
the bearing plate (1) and the second frame body (27) enclosed to form a second cavity; and
the battery comprising a control unit accommodated in the second cavity, and the control unit electrically connected to the battery cell (2020).

15. The box body (2010) according to claim 14, wherein, in the thickness direction (Z) of the bearing plate (1), an end of the reinforcing beam (2) facing away from the bearing plate (1) does not extend beyond an end of the second frame body (27) facing away from the bearing plate (1).

16. The box body (2010) according to claim 14, wherein the reinforcing beam (2) is spaced apart from the second frame body (27).

17. A battery, comprising:
a battery cell (2020), and
a box body (2010) of any one of claims 1 to 16, the box body (2010) configured to accommodate the battery cell (2020).

18. A vehicle (1000), comprising a battery according to claim 17, the battery configured to provide electric energy.

19. The vehicle (1000) according to claim 18, wherein the reinforcing beam (2) is a horizontal beam or a longitudinal beam of the vehicle (1000).

20. The vehicle (1000) according to claim 18, wherein the battery cell (2020) is located at a lower side of the bearing plate (1); and a pressure relief mechanism (2030) is provided at an end of the battery cell (2020) facing away from the bearing plate (1).
